Europäisches Patentamt

(19) European Patent Office

Office européen des brevets

(11) Veröffentlichungsnummer: **0 056 063**
**B1**

(12) **EUROPÄISCHE PATENTSCHRIFT**

(45) Veröffentlichungstag der Patentschrift:
08.05.85

(51) Int. Cl.⁴: **B 23 Q 7/14**

(21) Anmeldenummer: **81100075.1**

(22) Anmeldetag: **08.01.81**

(54) Förderanlage für Werkstücke mit Arbeitsstationen.

(43) Veröffentlichungstag der Anmeldung:
21.07.82 Patentblatt 82/29

(73) Patentinhaber: **Johann A. Krause Maschinenfabrik, Betonstrasse 31, D-2820 Bremen-Farge (DE)**

(45) Bekanntmachung des Hinweises auf die Patenterteilung:
08.05.85 Patentblatt 85/19

(72) Erfinder: **Krause, Johann A., Betonstrasse 31, D-2820 Bremen-Farge (DE)**

(84) Benannte Vertragsstaaten:
**DE FR GB IT NL SE**

(74) Vertreter: **Bolte, Erich, Dipl.-Ing. et al, Hollerallee 73, D-2800 Bremen (DE)**

(56) Entgegenhaltungen:
**EP - A - 0 003 024**
**EP - A - 0 013 733**
**DE - A - 1 814 452**
**DE - A - 2 106 595**
**DE - A - 2 410 242**
**FR - A - 2 306 788**
**FR - A - 2 369 906**
**US - A - 2 139 403**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Förderanlage, mit wenigstens einem Hauptförderstrang zum Transport von Werkstücken bzw. Werkstückträgern mit Werkstücken, an denen im Bereich von Arbeitsstationen Arbeiten zu verrichten sind, und mit einer Vielzahl von im Abstand voneinander angeordneten Abzweigungen, die quer zum Hauptförderstrang angeordnet sind und über die die Arbeitsstationen belieferbar sind.

Eine derartige Förderanlage ist beispielsweise aus der FR-A-2 369 906 bekannt, bei der ein Kettenförderer verwendet wird, der mehrere Arbeitsstationen beliefert und bei dem ein kontinuierlicher Umlauf mit einer Geschwindigkeit gemäß einer Sinusfunktion erfolgt. An dem Hauptförderstrang sind dort mehrere Abzweigungen quer zum Hauptförderstrang vorgesehen, wobei jeweils eine Abzweigung einen Arbeitsplatz bildet, an dem die erforderlichen Arbeiten durchgeführt werden können. Zu diesem Zweck sind die Werkstücke jeweils auf einem Werkstückträger angeordnet, der quer zur Hauptförderrichtung in eine Schienenführung des Arbeitsplatzes schiebbar ist. Diese Querbewegung des Werkstückträgers erfolgt mit einem zugeordneten Zylinder, der fest mit dem Werkstückträger verbunden ist und ihn in der Arbeitsstation verriegelt. Bei Einfahren des Zylinders wird das Werkstück anschließend wieder mit dem Werkstückträger aus der Arbeitsstation herausgefahren.

Eine derartige Förderanlage gemäß der FR-A-2 369 906 ist jedoch nur für kleinere bzw. leichte Werkstücke geeignet, da die als Schieber ausgebildeten Werkstückträger gleitend in eine Führung laufen müssen, wobei in der Praxis Reibungsprobleme auftreten. Dies gilt insbesondere bei schweren Werkstücken, wenn diese auf den Werkstückträgern in die Führungen eingefahren werden. Dabei kann es zu Unfällen oder Beschädigungen kommen, wenn die Werkstückträger nicht genau in die entsprechenden Führungen hineinpassen oder sich verkanten. Im übrigen besteht jede Arbeitsstation nur aus einer Abzweigung, Maßnahmen zur eigenständigen Zeiteinteilung für den Werker sind dort nicht getroffen. Eine Förderanlage der eingangs genannten Art ist auch aus der DE-A-1 814 452 bekannt, bei der zwei parallel zueinander angeordnete Hauptförderer und eine Vielzahl von quer dazu verlaufenden Querförderbahnen vorgesehen sind. Sämtliche Förderer sind dabei als Einbahnstraßen ausgebildet, wobei die Zuförderung und Abförderung stets in der gleichen Richtung erfolgt. Die Belieferung der querverlaufenden Abzweigungen erfolgt mit Drehkreuzen, die das jeweilige Werkstück aus dem Hauptförderstrang in den gewünschten Querförderer einfahren, an dem die spezielle Bearbeitung erfolgen soll. Dabei ist jeder Querförderer mit einer speziellen Werkzeugmaschine ausgestattet, so daß jeweils ein Querförderer eine Arbeitsstation bildet. Ist eine bestimmte Arbeitsstation besetzt, so wird ein auf dem Hauptförderstrang ankommendes Werkstück gleicher Gattung auf dem Hauptförderstrang weitertransportiert und durchläuft die gesamte Länge des Hauptförderstranges, bis es wieder an der Abzweigung für die gewünschte Arbeitsstation ankommt. Das bedeutet, daß der Arbeiter an dieser speziellen Werkzeugmaschine abwarten muß, bis das nächste Werkstück dieser Gattung an der Abzweigung ankommt und auf dem Querförderer zugeführt wird. Dadurch entstehen im Betrieb beträchtliche Totzeiten, denn der Werker hat keine Möglichkeit, diese Wartezeit sinnvoll zu nutzen und eine andere Arbeit zu verrichten. Für jeden Querförderer sind außerdem zwei Knotenpunkte, d. h. Umsetzvorrichtungen mit Drehscheiben erforderlich, was die Investitionskosten erhöht. Außerdem arbeitet eine derartige Förderanlage aufgrund der langen Förderwege nicht wirtschaftlich genug.

Förderanlagen der eingangs genannten Art kommen in großem Umfang in der Automobilindustrie zum Einsatz. Dabei sind die Werkstücke, insbesondere Motoren, Getriebe, Achsen usw., auf besonderen Werkstückträgern montiert, die ihrerseits auf der Förderanlage transportiert werden.

Dabei können die unter Umständen sehr langen Förderanlagen durch Friktionsrollenbahnen gebildet werden, wobei Friktionsrollenbahnen zum Einsatz gelangen können, die mit den Merkmalen gemäß der DE-C-2 502 557 ausgestattet sind. Bei diesem Konstruktionsprinzip werden Friktionswellen mit auf diesen angeordneten Friktionsrollen über Kegelräder durch eine Hauptwelle angetrieben.

Während des Aufenthaltes auf der Förderanlage sind dabei häufig Bearbeitungen an den Werkstücken durchzuführen. Soweit diese Bearbeitungen mit Maschinen bzw. Werkzeugmaschinen ausgeführt werden, ist in momentanes Anhalten der Werkstückträger im Bereich der neben einem Hauptförderstrang installierten Werkzeugmaschinen erforderlich. Manuelle Bearbeitungen werden häufig während des Weitertransports durchgeführt. In jedem Falle ist die Bearbeitung von Werkstücken während ihres Aufenthaltes auf dem Hauptförderstrang nachteilig, weil sich dadurch notwendigerweise Verzögerungen im Bewegungsablauf ergeben. Verzögerungen im Bewegungsablauf des Hauptförderstranges müssen dabei ebenso vermieden werden wie Totzeiten bei der Belieferung von Querförderern oder Abzweigungen, an denen die verschiedenen Bearbeitungen durchgeführt werden.

Der Erfindung liegt daher die Aufgabe zugrunde, eine Förderanlage der eingangs genannten Art dahingehend weiterzuentwickeln und zu verbessern, daß Bearbeitungen, insbesondere manuelle Arbeiten, an Werkstücken einerseits ohne Störung des Transportflusses auf dem Hauptförderstrang und andererseits in eigenständiger Zeiteinteilung der Tätigkeit des Arbeiters ausgeführt werden können.

Die erfindungsgemäße Lösung besteht darin, eine Förderanlage der in Rede stehenden Art so auszubilden, daß der gemeinsame Hauptförderstrang und sämtliche, Querförderer bildende Abzweigungen als Friktionsrollenbahnen ausgebildet sind, daß jeweils ein Paar von benachbarten Abzweigungen auf derselben Seite des Hauptförderstranges eine gemeinsame Arbeitsstation bildet, bei der beide Abzweigungen im wesentlichen allseitig zugänglich sind, und daß jede Abzweigung mit einer eigenen, umkehrbaren Antriebseinrichtung für den Werkstückträger versehen ist.

Mit der erfindungsgemäßen Förderanlage wird in vorteilhafter Weise eine optimale Fertigung und Bearbeitung der jeweiligen Werkstücke erreicht, denn der Arbeitsablauf kann in rationalisierter Weise ablaufen, weil der jeweilige Arbeiter nach Durchführung der Bearbeitung an einem Werkstück auf der einen Abzweigung sich lediglich um 180° umzudrehen braucht, um unmittelbar mit der Bearbeitung eines Werkstückes im Bereich der anderen Abzweigung derselben Arbeitsstation zu beginnen. Auf diese Weise kann der Arbeiter selbst die Zeiteinteilung für die Bearbeitung der jeweiligen Werkstücke treffen und Totzeiten ausschließen.

Dabei können bei der erfindungsgemäßen Förderanlage mehrere derartige Arbeitsstationen im Bereich des Hauptförderstranges angeordnet sein. Da die Werkstücke bzw. ihre Werkstückträger für die Durchführung der Bearbeitung jeweils aus dem Bereich des Hauptförderstranges in die eine oder andere Abzweigung eines Hauptförderstranges ausgeschleust werden, kann der Transport auf dem Hauptförderstrang selbst ungehindert ablaufen. Die fertig bearbeiteten Werkstücke werden von der jeweiligen als Querförderer ausgebildeten Abzweigung selbsttätig zum Abtransport in den Hauptförderstrang zurückgeführt, da jede Abzweigung mit ihrer eigenen, umkehrbaren Antriebseinrichtung ausgerüstet ist.

Die Arbeitsstationen bzw. ihre als Friktionsrollenbahnen ausgebildeten Abzweigungen sind gemäß der Erfindung in spezieller Weise derart ausgestattet, daß die Länge der Abzweigungen etwa der Länge eines Werkstückträgers zuzüglich eines angemessenen Arbeitsspielraumes gegenüber dem Hauptförderstrang entspricht. Der in die jeweilige Abzweigung eingefahrene Werkstückträger wird dort in seiner Endposition selbsttätig verriegelt, so daß Relativbewegungen in der einen oder anderen Richtung für die Dauer der Bearbeitung ausgeschlossen sind. Zu diesem Zweck ist eine in spezieller Weise ausgebildete Rastvorrichtung mit Sperrklinke vorgesehen.

In Weiterbildung der erfindungsgemäßen Förderanlage ist ein an den Hauptförderstrang anschließender Umlaufförderer vorgesehen, der sich vorzugsweise über eine Vielzahl von Arbeitsstationen erstreckt und mit dem Werkstückträger mit unbearbeiteten Werkstücken am Ende eines Arbeitsabschnittes aufnehmbar und durch Transport in entgegengesetzter Richtung dem Hauptförderstrang am Anfang eines Arbeitsabschnittes wieder zuführbar sind. Mit einer derartigen Anordnung wird in vorteilhafter Weise erreicht, daß die Tätigkeit der Arbeiter nicht an feste, durch den Transportrhythmus bedingte Arbeitszeiten gebunden ist, vielmehr wird stets eine ausreichende Anzahl an Werkstücken bzw. Werkstückträgern im Hauptförderstrang zum Abruf zur Verfügung gestellt. Sofern einzelne Werkstücke nicht (sofort) bearbeitet bzw. in die Abzweigungen eingefahren werden können, gelangen sie über den Umlaufförderstang erneut in den Bereich der Arbeitsstationen.

Der Hauptförderstrang ist im Bereich der Abzweigungen sowie des Anschlusses des Umlaufförderstranges mit geeigneten Einrichtungen zur Ausleitung und Wiederaufnahme der Werkstücke bzw. Werkstückträger ausgerüstet, insbesondere mit einer Hubstation, mit der jeweilige Werkstückträger von der Friktionsrollenbahn des Hauptförderstranges angehoben und durch Querförderung in die Abzweigung gelangt. Eine derartige Hubstation ist vorzugsweise mit den Merkmalen gemäß dem DE-GM-8 011 623 ausgebildet.

Die Erfindung wird nachstehend anhand eines Ausführungsbeispieles und unter Bezugnahme auf die Zeichnung näher erläutert. Es zeigt

Fig. 1 einen vereinfachten Grundriß einer erfindungsgemäßen Förderanlage mit drei Arbeitsstationen,

Fig. 2 einen Teil eines Hauptförderstranges mit einer Abzweigung in perspektivischer Darstellung,

Fig. 3 eine Einzelheit einer Abzweigung im Längsschnitt derselben, bei vergrößertem Maßstab,

Fig. 4 einen Grundriß zu Fig. 3,

Fig. 5 einen Bereich der Förderanlage gemäß Fig. 1 in vergrößertem Maßstab, im Grundriß,

Fig. 6 eine Einzelheit an einem Werkstückträger in vergrößertem Maßstab.

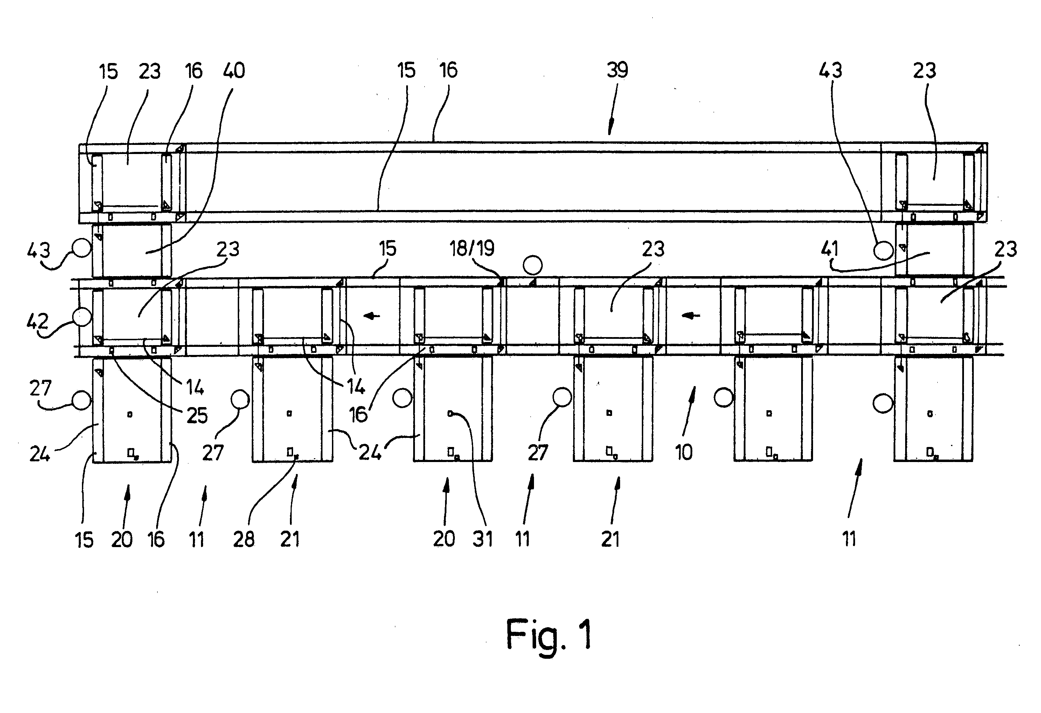

Die in Fig. 1 schematisch im Grundriß gezeigte Förderanlage zeigt einen Abschnitt eines Hauptförderstranges 10 mit drei Arbeitsstationen 11. Der Hauptförderstrang 10 ist Teil einer umfänglichen Transportstraße beispielsweise in einer Kraftfahrzeug- oder Motorenfabrik. Auf dem Hauptförderstrang 10 werden Werkstücke bzw. Werkstückträger 12 mit auf diesen angeordneten Werkstücken transportiert, bei dem Ausführungsbeispiel der Fig. 1 von rechts nach links. An den auf den Werkstückträgern 12 angeordneten Werkstücken sind bestimmte (manuelle) Arbeiten zu verrichten.

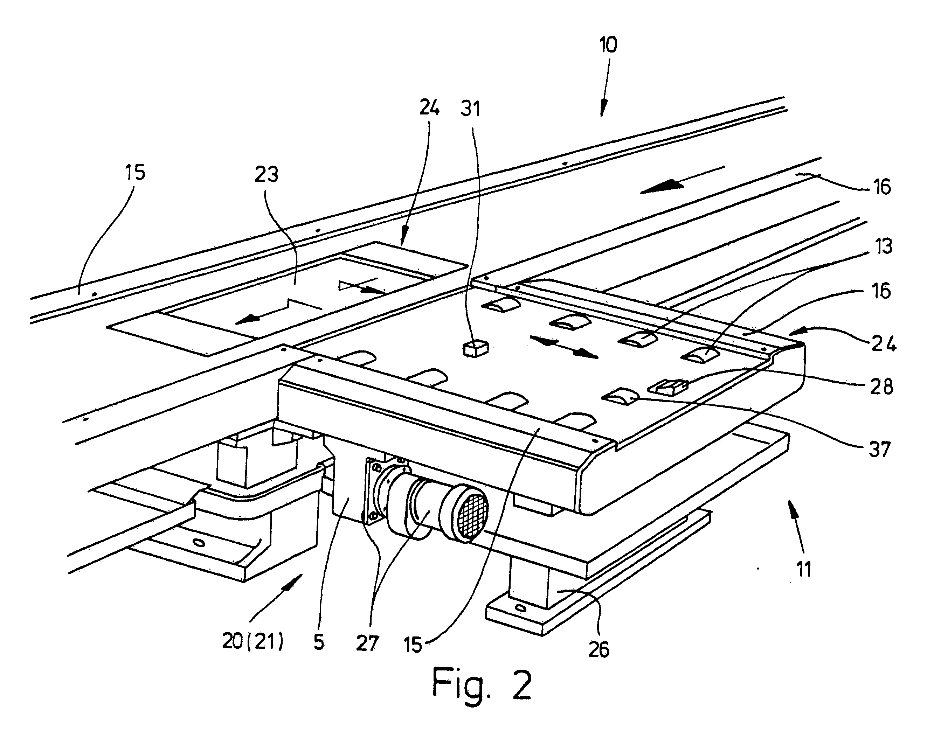

Der Hauptförderstrang 10 ist bei dem gezeigten Ausführungsbeispiel als Friktionsrollenbahn ausgebildet, und zwar im wesentlichen in einer Ausführung gemäß DE-C-2 502 557. Seitlich angeordnete Friktionsrollen 13 (siehe Fig. 2) sind auf quergerichteten Friktionswellen 14 drehbar angeordnet. Diese wiederum sind mit den Enden in seitlichen Tragschienen 15 und 16 gelagert. An einer dieser Tragschienen 15, 16 verläuft eine Hauptantriebswelle 17, die über Kegelräder 18, 19 jeweils mit dem Ende einer Friktionswelle 14 getrieblich verbunden ist.

Im Bereich der Arbeitsstationen sind an den in vorstehender Weise ausgebildeten Förderstrang 10 quergerichtete Abzweigungen 20, 21 angeschlossen. Diese dienen zur Aufnahme je eines Werkstückträgers 12 (oder mehrerer Werkstückträger) zur Durchführung von Arbeiten an den Werkstücken. Im vorliegenden Fall entspricht die Länge der Abzweigung 20, 21 etwa der Länge eines Werkstückträgers 12 zuzüglich eines angemessenen Arbeitsspielraums.

Zur Bearbeitung wird der betreffende Werkstückträger 12 im Bereich der Abzweigung 20, 21 auf dem Hauptförderstrang 10 durch eine Stoppeinrichtung 22 angehalten, z. B. in der Ausführung gemäß DE-A-2 823 188. Sodann wird eine in diesem Bereich in den Hauptförderstrang 10 eingebaute Hubstation 23 betätigt. Diese ist vorzugsweise mit den Merkmalen des DE-GM 8 011 623 ausgebildet. Der Werkstückträger 12 wird in dieser Hubstation 13 durch einen Hubtisch mit Friktionsrollenbahnabschnitten 24 angehoben und quer zum Hauptförderstrang 10 gefördert. Der Friktionsrollenbahnabschnitt 24 ist zu diesem Zweck im Bereich der Abzweigung 20 mit einem gesonderten Antrieb (Antriebsmotor 42) ausgerüstet.

Der Werkstückträger 12 wird über die seitliche Tragschiene 16 hinweggefördert, die zu diesem Zweck mit Zwischenrollen 25 ausgerüstet ist, in den Bereich einer der Abzweigungen 20, 21.

Während des Aufenthalts eines Werkstückträgers 12 im Bereich der Abzweigung 20, 21 werden die erforderlichen Arbeiten durchgeführt. Danach wird durch einen vom Werker ausgelösten Impuls der Werkstückträger 12 in den Hauptförderstrang 10 zurückgefördert.

Die am freien Ende auf einem Stützbock 26 aufliegende Abzweigung 20, 21 ist als Abschnitt einer Friktionsrollenbahn ausgebildet, also mit seitlichen Tragschienen 15, 16, Hauptantriebswelle 17, Kegelrädern 18, 19 und Friktionsrollen 13. Für den gesonderten Antrieb der Friktionsrollen 13 der Abzweigung 20, 21 ist ein E-Motor 27 an der Abzweigung 20, 21 angebracht. Dieser E-Motor 27 ist umkehrbar, so daß die Friktionsrollenbahn der Abzweigung 20, 21 in beiden Richtungen zu fördern vermag. Bei der Einführung eines Werkstückträgers 12 in die Abzweigung 20, 21 und bei der Rückführung in den Hauptförderstrang 10 werden die Friktionsrollen 13 jeweils in entsprechender Richtung durch den E-Motor 27 angetrieben.

Der Werkstückträger 12 ist während des Aufenthaltes in der Abzweigung 20, 21 lösbar arretiert, so daß Relativbewegungen in der einen oder anderen Richtung ausgeschlossen sind. Zu diesem Zweck ist im Bereich der Abzweigung 20, 21 eine selbsttätig arbeitende Sperrklinke 28 angebracht. Diese befindet sich etwa am Ende der Abzweigung 20, 21 neben der Längsmittelebene derselben. Die Sperrklinke 28 wirkt mit einem Anschlag 29 an der Unterseite des Werkstückträgers 12 zusammen. Die Sperrklinke 28 ist mit einer schrägen Auflauffläche 30 ausgebildet, über die der Anschlag 29 beim Einfahren des Werkstückträgers 12 in die Abzweigung 20, 21 unter Abwärtsbewegung der Sperrklinke 28 hinwegläuft. Diese liegt dann an der Rückseite des Anschlags 29 an und verhindert eine Bewegung des Werkstückträgers 12 in Richtung zum Hauptförderstrang 10.

Zur Sicherung des Werkzeugträgers 12 gegen Bewegungen in entgegengesetzter Richtung ist ein Festanschlag 31 an der Abzweigung 20, 21 angebracht. Der Festanschlag 31 sitzt an einer Quertraverse 32 zwischen den Tragschienen 15, 16. Der Festanschlag 31 arbeitet mit einem zweiten Anschlag 33 an der Unterseite des Werkstückträgers 12 zusammen. Die Anordung ist so getroffen, daß der Anschlag 29 an den Festanschlag 31 vorbeiläuft, während der Anschlag 33 diesen beaufschlagt.

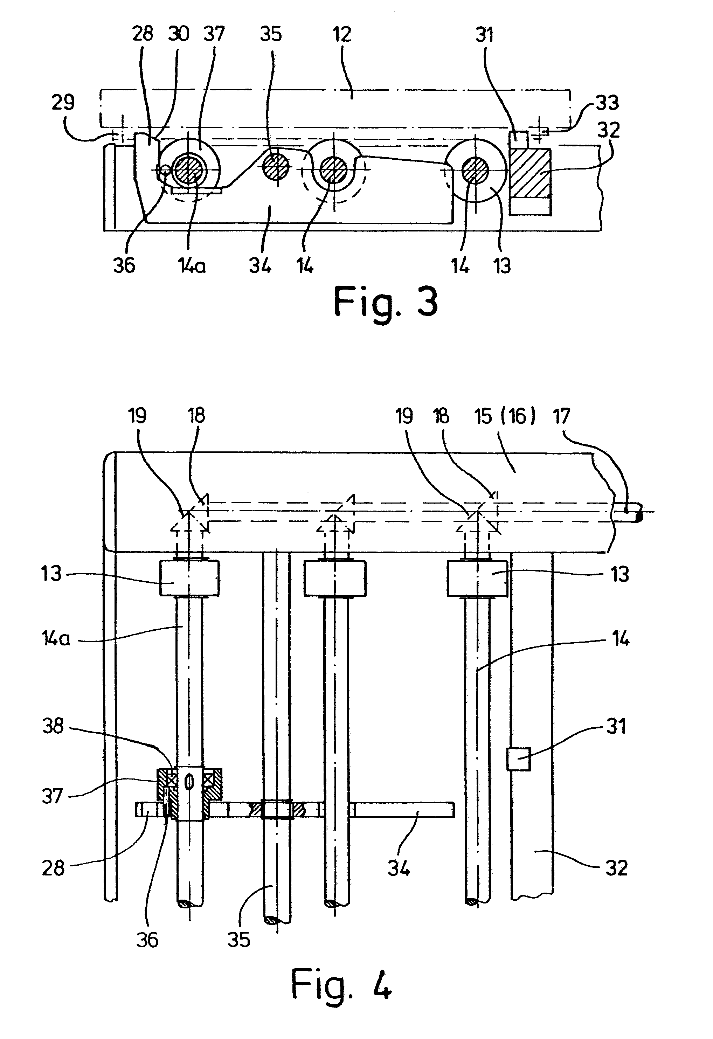

Die Sperrklinke 28 ist selbsttätig arbeitend ausgebildet. Bei dem gezeigten Ausführungsbeispiel sitzt die Sperrklinke 28 an einem Ende eines zweiarmigen Klinkenhebels 34. Dieser ist um eine quergerichtete Achse 35 kippbar. Die Proportionen des Klinkenhebels 34 sind so getroffen, daß die am äußeren Ende angeordnete Sperrklinke 28 durch Eigengewicht stets in die obere, in Fig. 3 gezeigte Sperrstellung belastet ist. Beim Überfahren der Sperrklinke 28 durch den Anschlag 29 wird der Klinkenhebel 34 im Gegenuhrzeigersinn (bezogen auf Fig. 3) verschwenkt.

Die Sperrklinke 28 wird zur Rückführung des Werkstückträgers 12 nach Durchführung der Bearbeitung in den Hauptförderstrang 10 ohne besondere Maßnahme des Arbeiters aus der Sperrstellung bewegt, und zwar im vorliegenden Fall durch Inbetriebsetzen der Friktionsrollen 13 durch Einschalten des E-Motors 27. Die dadurch bewirkte Drehbewegung der Friktionswelle 14a hat ein Absenken der Sperrklinke 38 durch Verschwenken des Klinkenhebels 34 zur Folge.

Auf der Friktionswelle 14a ist ein mit dieser umlaufender Betätigungsstift 36 gelagert, der bei entsprechender Drehrichtung der Friktionswelle 14a gegen den Klinkenhebel 34 läuft und diesen dadurch im Gegenuhrzeigersinn, also im absenkenden Sinne der Sperrklinke 28 bewegt. Der Betätigungsstift 36 ist an einer Steuerrolle 37 angeordnet, die mit einem Freilauf 38 auf der Friktionswelle 14a gelagert ist. Der Freilauf 38 bewirkt, daß der Betätigungsstift 36 bei Drehung der Friktionswelle 14a nur dann mitgenommen wird, wenn die Friktionswelle 14a in rückförderndem Sinne des Werkstückträgers 12 angetrieben wird. Bei der entgegengesetzten Drehrichtung, nämlich beim Einfördern des Werkstückträgers 12 in die Abzweigung 20, 21, läuft der Betätigungsstift 36 nicht mit um; der Klinkenhebel 34 wird demnach nicht betätigt.

Dem bei dem vorliegenden Ausführungsbeispiel durch eine Mehrzahl von Arbeitsstationen 11 definierten Bearbeitungsabschnitt ist ein Umlaufförderstrang 39 zugeordnet. Dieser besteht aus einer Friktionsrollenbahn mit den bereits beschriebenen Merkmalen, also im wesentlichen mit dem Aufbau des Hauptförderstrangs 10. Der Umlaufförderstrang 39 erstreckt sich parallel zum Hauptförderstrang 10 und wird in entgegengesetzter Richtung angetrieben. An den Enden des in der Länge begrenzten Umlaufförderstrangs 39 sind quergerichtete Verbindungsabschnitte 40 und 41 gebildet. Diese sind ebenfalls Abschnitte von Friktionsrollenbahnen mit den erwähnten Merkmalen. Durch die Verbindungsabschnitte 40 bzw. 41 werden Werkstückträger 12 unter bestimmten Voraussetzungen, nämlich bei nichtdurchgeführter Bearbeitung, aus dem Bereich des Hauptförderstrangs 10 heraus- und in den Umlaufförderstrang 39 ein- bzw. von diesem in den Hauptförderstrang 10 zurückgeführt, und zwar in einen in Förderrichtung zurückliegenden Bereich. Ein für die Durchführung von Bearbeitungen nicht abgerufener Werkstückträger 12 wird dadurch ein weiteres Mal an den Arbeitsstationen 11 vorbeigefördert.

Die Verbindungsabschnitte 40, 41 sind bei dem gezeigten Ausführungsbeispiel im Bereich einer Arbeitsstation bzw. einer Abzweigung 20/21 angeordnet. Die hier im Hauptförderstrang 10 angeordnete Hubstation 23 zur Durchführung der Querbewegungen des Werkstückträgers 12 ist mit einem Antriebsmotor 42 mit umkehrbarer Drehrichtung für den Antrieb des der Hubstation 23 zugeordneten Abschnitts der Friktionsrollenbahn ausgebildet. Durch ein und dieselbe Hubstation 23 kann dadurch der Werkstückträger 12 alternativ der Abzweigung 20, 21 und dem Verbindungsabschnitt 40 zugeführt werden. In analoger Weise ist die Hubstation 23 im Bereich der Wiedereinführung des Werkstückträgers 12 in den Hauptförderstrang 10 ausgebildet. Die Verbindungsabschnitte 40, 41 fördern jeweils nur in einer Transportrichtung, angetrieben durch entsprechende Antriebsmotoren 43. Dieser dient jeweils auch zum Antrieb einer an den Enden des Umlaufförderstrangs 39 vorgesehenen weiteren Hubstation 23.

Die Bewegungen der Werkstückträger erfolgen bei der beschriebenen Anlage selbsttätig durch entsprechende, programmierbare Steuereinrichtungen. Beispielsweise kann jeder Werkstückträger 12 mit einer Zustandskodierung versehen sein, die auf noch nicht erfolgte Bearbeitung oder bereits durchgeführte Bearbeitung des Werkstücks einstellbar ist. Diese Zustandskodierung wird während des Transportes des Werkstückträgers abgelesen, derart, daß im Sinne des jeweils vorhandenen Kodes die beschriebenen Einrichtungen der Förderanlage in dem einen oder anderen Sinne betätigt werden.

Zur Durchführung dieser Zustandskodierung ist bei dem vorliegenden Ausführungsbeispiel jeder Werkstückträger an seiner Unterseite mit einem metallischen Tastorgan versehen, das mit im Bereich der Förderbahn angeordneten Initiatoren zusammenarbeitet. Diese letztgenannten, berührungsfreien Tastorgane sind im Prinzip bekannt.

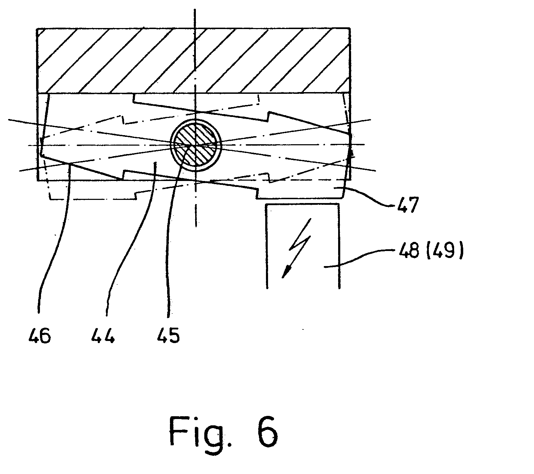

Das bewegliche Organ am Werkstückträger 12 ist gemäß Fig. 6 als (metallische) Wippe 44 ausgebildet. Diese ist um ein Schwenklager 45 kippbar. An den Enden der Wippe 44 befinden sich jeweils Taststücke 46 und 47. Die Anordnung ist so getroffen, daß je nach Stellung der Wippe 44 das eine oder andere Taststück 46, 47 nach unten gerichtet und damit in der zur Übertragung eines Steuersignals erforderlichen Position in bezug auf einen (ortsfesten) Initiator 48, 49 gebracht ist. In Fig. 6 befindet sich das Taststück 47 in dieser Relativstellung.

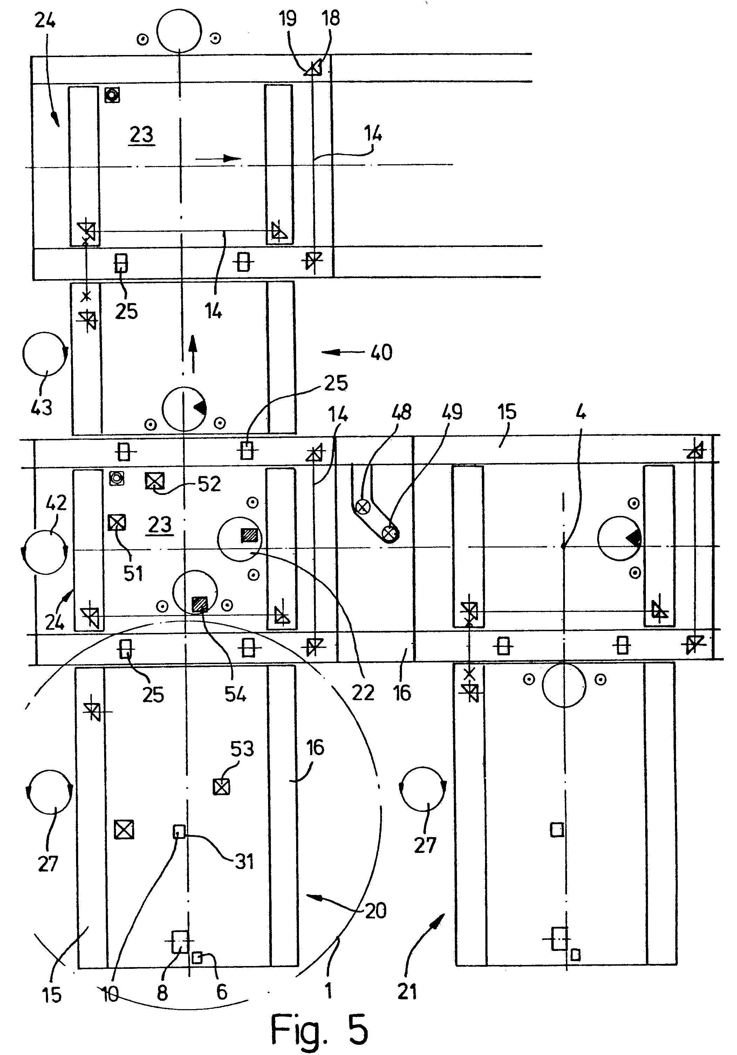

Bei dem vorliegenden Ausführungsbeispiel (Fig. 5) sind zwei Initiatoren 48 und 49 der Abzweigung 20 bzw. der zu dieser gehörenden Hubstation 23 in Bewegungsrichtung vorgeordnet. Je nach der Stellung der Wippe 44 wird der eine oder andere Initiator 48 bzw. 49 angesprochen, wobei der eine auf das Signal »fertig bearbeitet« und der andere auf das Signal »nicht bearbeitet« reagiert. Im letztgenannten Falle wird die Stoppeinrichtung 22 betätigt, derart, daß der betreffende Werkstückträger exakt auf der Hubstation 23 positioniert, nämlich angehalten wird. Es folgt sodann der weitere Ablauf, nämlich das Einfahren des Werkstückträgers in die Abzweigung 20. Ist hingegen der Werkstückträger bzw. das Werkstück bereits bearbeitet, wird die Hubstation 23 derart durch den betreffenden Initiator 48, 49 beaufschlagt, daß der Werkstückträger auf dem Hauptförderstrang 10 weiterläuft.

Nach Durchführung einer Bearbeitung beispielsweise in der Abzweigung 20 wird die Kodierung am Werkstückträger 12, also die Stellung der Wippe 44 verändert. Zu diesem Zweck betätigt der Werker einen Drucktaster (nicht gezeigt). Dieser wiederum löst einen Kodiermagneten 53 aus, der ortsfest im Bereich unterhalb der Wippe 44 in der Abzweigung 20 angeordnet ist. Durch den Kodiermagneten 53 wird die Stellung der Wippe 44 verändert. Wenn nunmehr die erforderlichen Signale dafür vorliegen, daß der Zugang zum Hauptförderstrang 10 frei ist, erfolgt die selbsttätige Rückführung des Werkstückträgers 12 in diesen in der bereits beschriebenen Weise.

Im Bereich der Abzweigung 20 ist ein Initiator 50 vorgesehen, der die Aufgabe hat, den Belegzustand der betreffenden Abzweigung abzutasten und zu signalisieren. Des weiteren sind an geeigneter Stelle Initiatoren 51 und 52 im Bereich der Hubstation 23 angeordnet. Diese haben die Aufgabe, die erforderlichen Schaltschritte auszulösen, wenn sich ein Werkstückträger 12 in der exakten Position auf den Hubstation 23 befindet. Zu den betätigten Organen gehört auch eine weitere Stoppeinrichtung 54, die betätigt wird, wenn ein Werkstückträger 12 aus der Abzweigung 20 in den Hauptförderstrang 10 zurückgeführt ist.

**Patentansprüche**

1. Förderanlage, mit wenigstens einem Hauptförderstrang (10) zum Transport von Werkstükken bzw. Werkstückträgern (12) mit Werkstükken, an denen im Bereich von Arbeitsstationen (11) Arbeiten zu verrichten sind und mit einer Vielzahl von im Abstand voneinander angeordneten Abzweigungen (20, 21), die quer zum Hauptförderstrang (10) angeordnet sind und über die die Arbeitsstationen (11) belieferbar sind, dadurch gekennzeichnet, daß der gemeinsame Hauptförderstrang (10) und sämtliche, Querförderer bildende Abzweigungen (20, 21) als Friktionsrollenbahnen ausgebildet sind, daß jeweils ein Paar von benachbarten Abzweigungen (20, 21) auf derselben Seite des Hauptförderstranges (10) eine gemeinsame Arbeitsstation (11) bildet, bei der beide Abzweigungen (20, 21) im wesentlichen allseitig zugänglich sind, und daß jede Abzweigung (20, 21) mit einer eigenen umkehrbaren Antriebseinrichtung (24, 27) für den Werkstückträger (12) versehen ist.

2. Förderanlage nach Anspruch 1, dadurch gekennzeichnet, daß die Länge einer Abzweigung (20, 21) etwa der Länge eines Werkstückträgers (12) einschließlich eines Arbeitspielraumes entspricht.

3. Förderanlage nach Anspruch 1 oder 2, dadurch gekennzeichnet, daß der Werkstückträger (12) in seiner Endposition in der Abzweigung (20, 21) gegen Verschiebungen verriegelbar ist, insbesondere durch eine selbsttätige Rastvorrichtung (28/31).

4. Förderanlage nach einem oder mehreren der Ansprüche 1 bis 3, dadurch gekennzeichnet, daß der Werkstückträger (12) im Bereich der Abzweigung (20, 21) durch eine Sperrklinke (28) in Arbeitsposition arretierbar ist, die durch Rückförderung des Werkstückträgers (12) zum Hauptförderstrang (10) lösbar ist, insbesondere durch Antrieb des Friktionsrollenbahnabschnittes (24) der Abzweigung (20, 21).

5. Förderanlage nach Anspruch 4, dadurch gekennzeichnet, daß die Sperrklinke (28) an einem schwenkbaren Klinkenhebel (34) angeordnet ist, durch den die Sperrklinke (28), vorzugsweise durch Eigengewicht, in die Verriegelungsstellung belastet ist, und der durch Drehen einer Friktionswelle (14a) bei Beginn der Rückförderung des Werkstückträgers (12) zum Hauptförderstrang (10) aus der Verriegelungsstellung schwenkbar ist.

6. Förderanlage nach Anspruch 5, dadurch gekennzeichnet, daß an der Friktionswelle (14a) ein Betätigungsstift (36) für den Klinkenhebel (34) angeordnet ist, der bei Drehung der Friktionswelle (14a) eine Schwenkbewegung des Klinkenhebels (34) unter Absenken der Sperrklinke (28) bewirkt, und daß der Betätigungsstift (36) an einer Steuerrolle (37) angebracht ist, die mit einem Freilauf (38) auf der Friktionswelle (14a) derart gelagert ist, daß der Betätigungsstift (36) lediglich bei einem Antrieb der Friktionswelle (14a) in rückförderndem Sinne mitnehmbar ist.

7. Förderanlage nach einem oder mehreren der Ansprüche 1 bis 6, dadurch gekennzeichnet, daß die Abzweigung (20, 21) auf der dem Hauptförderstrang (10) zugekehrten Seite mit einem Anschlag (Festanschlag 31) zur Sicherung des Werkstückträgers (12) gegen Bewegungen in Richtung zum freien Ende der Abzweigung (20, 21) versehen ist.

8. Förderanlage nach Anspruch 7, dadurch gekennzeichnet, daß der Festanschlag (31) in bezug auf die Längsmittelebene des Werkstückträgers (12) versetzt zur Sperrklinke (28) angeordnet ist und mit einem Anschlag (33) an der Unterseite des Werkstückträgers (12) zusammenarbeitet.

9. Förderanlage nach einem oder mehreren der Ansprüche 3 bis 8, dadurch gekennzeichnet, daß die Rastvorrichtung (28/31) im Bereich unterhalb des Werkstückträgers (12) in seiner Arbeitsstellung angeordnet ist.

10. Förderanlage nach einem oder mehreren der Ansprüche 1 bis 9, dadurch gekennzeichnet, daß an den Hauptförderstrang (10) ein Umlaufförderstrang (39) anschließt, der sich über vorzugsweise eine Mehrzahl von Arbeitsstationen (11) erstreckt und durch den Werkstückträger (12) mit unbearbeiteten Werkstücken am Ende eines Arbeitsabschnitts aufnehmbar und durch Transport in entgegengesetzter Richtung dem Hauptförderstrang (10) am Anfang eines Arbeitsabschnitts wieder zuführbar sind.

11. Förderanlage nach Anspruch 10, dadurch gekennzeichnet, daß der Umlaufförderstrang (39) aus einem parallel zum Hauptförderstrang (10) geführten Förderer, insbesondere einer Friktionsrollenbahn besteht, die an ihren Enden durch quergerichtete Verbindungsabschnitte (40, 41) an den Hauptförderstrang (10) anschließt.

12. Förderanlage nach einem oder mehreren der Ansprüche 1 bis 11, dadurch gekennzeichnet, daß die Werkstückträger (12) mit Codiereinrichtungen, insbesondere mit verstellbaren Tastorganen (Wippe 44) ausgestattet sind, die mit ortsfest am Hauptförderstrang (10) und/oder an den Abzweigungen (20, 21) angeordneten Abtast- sowie Stellorganen zusammenwirken.

13. Förderanlage nach einem oder mehreren der Ansprüche 1 bis 12, dadurch gekennzeichnet, daß an der Unterseite der Werkstückträger (12) bewegbare Taststücke (46, 47), insbesondere an einer Wippe (44) angeordnet sind, die alternativ in eine wirksame Position in bezug auf ortsfeste, in der Bewegungsbahn angeordnete Initiatoren (48, 49) bewegbar sind.

14. Förderanlage nach Anspruch 12 oder 13, dadurch gekennzeichnet, daß die Codiereinrichtungen, insbesondere die Wippe (44), im Bereich einer Abzweigung (20, 21), vorzugsweise über einen betätigbaren Codiermagneten (53) verstellbar sind.

## Claims

1. Conveyor system, with at least one conveyor (10) for conveying workpieces or work carriers (12) with workpieces, on which work is to be carried out in the vicinity of working stations (11) and with a plurality of spaced branches (20, 21) arranged at right angles to the main conveyor (10) and enabling the work stations (11) to be supplied, characterized in that the common main conveyor (10) and all the branches (20, 21) forming transverse conveyors are constructed as friction roller tracks, that in each case one pair of adjacent branches (20, 21) forms a common work station (11) on the same side of the main conveyor (10), the two branches (20, 21) being essentially accessible from all sides, and that each branch (20, 21) is provided with its own reversible drive means (24, 27) for the work carrier (12).

2. Conveyor system according to claim 1, characterized in that the length of a branch (20, 21) corresponds to the length of a work carrier (12), including a work clearance.

3. Conveyor system according to claim 1 or 2, characterized in that the work carrier (12) can be locked in its end position in the branch (20, 21) so that it is not subject to displacements, particularly through the use of an automatic blocking device (28/31).

4. Conveyor system according to one or more of the claims 1 to 3, characterized in that the work carrier (12) can be arrested in the working position in the vicinity of the branch (20, 21) by a retaining pawl (28), which can be released by the return of the work carrier (12) to the main conveyor (10), particularly through the drive of the friction roller track section (24) of the branch (20, 21).

5. Conveyor system according to claim 4, characterized in that the retaining pawl (28) is arranged on a pivotable ratchet lever (34), through which the pawl (28) is loaded in the locking position, preferably due to its own weight, and which by rotating a friction shaft (14a) at the start of the return of the work carrier (12) to the main conveyor (10) can be pivoted out of the locking position.

6. Conveyor system according to claim 5, characterized in that on the friction shaft (14a) is provided an actuating pin (36) for the ratchet lever (34) which, on rotating the friction shaft (14a), brings about a pivoting movement of the ratchet lever (34) whilst lowering the retaining pawl (28), and that the actuating pin (36) is fitted to a control roller (37), which is mounted with a free wheel (38) on the friction shaft (14a) in such a way that the actuating pin (36) is only entrained on driving the friction shaft (14a) in the rearward direction.

7. Conveyor system according to one or more of the claims 1 to 6, characterized in that the branch (20, 21) is provided on the side facing the main conveyor (10) with a stop (fixed stop 31) for securing the work carrier (12) against movements in the direction towards the free end of the branch (20, 21).

8. Conveyor system according to claim 7, characterized in that, with respect to the median longitudinal plane of the work carrier (12), the fixed stop (31) is displaced with respect to the retaining pawl (28) and cooperates with a stop (33) on the bottom of the work carrier (12).

9. Conveyor system according to one or more of the claims 3 to 8, characterized in that the locking device (28/31) is arranged in its working position in the area below the work carrier (12).

10. Conveyor system according to one or more of the claims 1 to 9, characterized in that a circular conveyor (39) is connected to the main conveyor (10) and extends preferably over a plurality of work stations (11) and can receive from the work carrier (12) unworked workpieces at the end of a working stage and by conveying in the opposite direction can be supplied again to the main conveyor (10) at the beginning of a working stage.

11. Conveying system according to claim 10, characterized in that the circular conveyor (39) comprises a conveyor guided parallel to the main conveyor (10), in particular a friction roller track, whose ends are connected to the main conveyor (10) by transversely directed connecting sections (40, 41).

12. Conveyor system according to one or more of the claims 1 to 11, characterized in that the work carrier (12) is provided with coding means, particularly with adjustable sensing members (rocker 44), which cooperate with scanning or control members arranged in fixed manner on the main conveyor (10) and/or on the branches (20, 21).

13. Conveyor system according to one or more of the claims 1 to 12, characterized in that movable sensing pieces (46, 47) are arranged on the bottom of the work carrier (12), particularly on a rocker (44), and are alternately movable into an active position with respect to fixed initiators (48, 49) arranged in the path of movement.

14. Conveyor system according to claim 12 or 13, characterized in that the coding means, particularly the rocker (44) are adjustable in the vicinity of the branch (20, 21), preferably by means of an actuatable coding magnet (53).

**Revendications**

1. Installation de transport, comportant au moins une ligne de transport principale (10), pour le transport de pièces ou porte-pièces (12) munis de pièces sur lesquelles il s'agit d'effectuer des travaux dans la zone de postes de travail (11), et plusieurs embranchements (20, 21) écartés les uns des autres et disposés transversalement par rapport à la ligne de transport principale (10) et qui permettant d'approvisionner les postes de travail (11), caractérisée par le fait que la ligne de transport principale commune (10) et tous les embranchements (20, 21) constituant des convoyeurs transversaux sont conçus comme des voies à rouleaux à friction, que chaque paire d'embranchements voisins (20, 21) situés du même côté de la ligne de transport principale (10) forme un poste de travail (11) commun, sur lequel les deux embranchements (20, 21) sont quasiment accessibles de tous côtés, et que chaque embranchement (20, 21) est muni d'un moyen d'entraînement (24, 27) propre et réversible, pour le porte-pièce (12).

2. Installation de transport selon la revendication 1, caractérisée par le fait que la longueur d'un embranchement (20, 21) correspond à peu près à la longueur d'un porte-pièce (12), marge de travail comprise.

3. Installation de transport selon la revendication 1 ou 2, caractérisée par le fait que le porte-pièce (12) peut être bloqué, dans sa position finale dans l'embranchement (20, 21), pour l'empêcher de se déplacer, notamment par le moyen d'une disposition à crans automatique (28/31).

4. Installation de transport selon une ou plusieurs des revendications 1 à 3, caractérisée par le fait que le porte-pièce (12) peut, dans la zone de l'embranchement (20, 21), être arrêté par un rochet (28) dans la position de travail, cette position pouvant être libérée par renvoi du porte-pièce (12) vers la ligne de transport principale (10), en particulier par l'entraînement du tronçon de voie à rouleaux à friction (24) de l'embranchement (20/21).

5. Installation de transport selon la revendication 4, caractérisée par le fait que le rochet (28) est disposé sur un levier à cliquet (34) pivotant qui charge le rochet (28), de préférence sous l'action de son poids propre, dans la position de blocage et qui peut pivoter par rotation d'un arbre de friction (14a) lors du début du renvoi du porte-pièce (12) vers la ligne de transport principale, quittant ainsi la position de blocage.

6. Installation de transport selon la revendication 5, caractérisée par le fait que, sur l'arbre à friction (14a), se trouve une goupille de commande (36) pour le levier à cliquet (34), cette goupille provoquant un basculement du levier à cliquet (34), lors de la rotation de l'arbre à friction (14a), basculement s'accompagnant d'une descente du rochet (28), et la goupille de commande (36) est disposée sur un rouleau de commande (37) qui repose avec une roue libre (38) sur l'arbre à friction de telle façon que la goupille de commande (36) ne peut être entraînée qu'en cas d'entraînement de l'arbre à friction (14e) dans le sens rétrograde.

7. Installation de transport selon l'une des revendications 1 à 6, caractérisée par le fait que l'embranchement (20, 21) est muni, sur le côté qui est orienté vers la ligne de transport principale, d'une butée (butée fixe 31) destinée à empêcher le porte-pièce (12) de se déplacer vers l'extrémité libre de l'embranchement (20, 21).

8. Installation de transport selon la revendication 7, caractérisée par le fait que, par rapport au plan médian longitudinal du porte-pièce (12), la butée fixe (31) est décalée vis à vis du rochet (28) et coopère avec une butée (33) sur la face inférieure du porte-pièce (12).

9. Installation de transport selon une ou plusieurs des revendications 3 à 8, caractérisée par le fait que le dispositif à crans (28/31) est disposé dans sa position de travail dans la zone située au-dessous du porte-pièce (12).

10. Installation de transport selon une ou plusieurs des revendications 1 à 9, caractérisée par le fait que, sur la ligne de transport principale (10), se raccorde une ligne de transport de recyclage (39) qui s'étend de préférence sur plusieurs postes de travail (11) et grâce à laquelle les porte-pièces (12) portant des pièces non usinées peuvent être recueillis à l'extrémité d'un secteur de travail pour être ramenés par transport en direction opposée sur la ligne de transport principale (10) au début d'un secteur de travail.

11. Installation de transport selon la revendication 10, caractérisée par le fait que la ligne de transport de recyclage (39) se compose d'un convoyeur, en particulier d'une voie à rouleaux à friction, s'étendant parallèlement à la ligne de transport principale (10), et qui se raccorde, à ses extrémités et par le biais de tronçons de liaison transversaux (40, 41), à la ligne de transport principale (10).

12. Installation de transport selon une ou plusieurs des revendications 1 à 11, caractérisée par le fait que les porte-pièces (12) sont munis de systèmes de codage, en particulier de palpeurs réglables (bascule 44), qui coopèrent avec des organes de balayage ainsi qu'avec des organes de réglage fixes disposés sur la ligne de transport principale (10) et/ou sur les embranchements (20, 21).

13. Installation de transport selon une ou plusieurs des revendications 1 à 12, caractérisée par le fait que, à la partie inférieure des porte-pièces (12), se trouvent des palpeurs (46, 47) mobiles, en particulier sur une bascule (44), ces palpeurs pouvant être emanés au choix sur une position efficace par rapport à des déclencheurs (48, 49) fixes, disposés dans la voie de déplacement.

14. Installation de transport selon la revendication 12 ou 13, caractérisée par le fait que les systèmes de codage, en particulier la bascule (44), sont réglables dans la zone d'un embranchement (20, 21), de préférence par un aimant de codage (53) que l'on peut commander.

Fig. 1

Fig. 2

0 056 063

Fig. 3

Fig. 4

0 056 063

Fig. 5

**46      44      45**

47

48 (49)

# Fig. 6